# EUROPÄISCHE PATENTSCHRIFT

(11) **EP 2 864 155 B1**
(45) Veröffentlichungstag und Bekanntmachung des Hinweises auf die Patenterteilung: **05.12.2018**
(21) Anmeldenummer: 13736790.0
(22) Anmeldetag: 21.06.2013
(51) Int. Cl.: B60N 2/235, B60N 2/90

(54) **BESCHLAG FÜR EINEN FAHRZEUGSITZ UND FAHRZEUGSITZ**
FITTING FOR A VEHICLE SEAT AND VEHICLE SEAT
FERRURE POUR UN SIÈGE DE VÉHICULE ET SIÈGE DE VÉHICULE

(30) Priorität: 26.06.2012 DE 102012012847
(43) Veröffentlichungstag der Anmeldung: 29.04.2015
(73) Patentinhaber: Adient Luxembourg Holding S.à r.l., 1855 Luxembourg (LU)
(72) Erfinder: PETERS, Christoph, 42929 Wermelskirchen (DE); ASSMANN, Uwe, 42855 Remscheid (DE)
(74) Vertreter: Liedhegener, Ralf
(86) Internationale Anmeldenummer: PCT/EP2013/062959
(87) Internationale Veröffentlichungsnummer: WO 2014/001208

(56) Entgegenhaltungen:
- WO-A1-2011/160771
- WO-A2-2009/100125
- DE-A1-102011 010 700

## Beschreibung

### Stand der Technik

Aus der DE 10 2008 024 853 A1 ist ein gattungsgemäßer Beschlag bekannt, dessen Befestigungsring drei axial ausgerichtete Stege aufweist, die in drei axiale Vertiefungen eines Mitnehmers eingreifen und somit die Winkellage des Befestigungsringes relativ zum Mitnehmer bestimmen. Jeweils eine an den Stegen in Umfangsrichtung ausgebildete Kante liegt dabei an einer Fläche des Mitnehmers an und wird in diesem Bereich ultraschallgeschweißt. Nachteilig ist, dass keine umlaufende Ultraschallschweißverbindung erzeugt wird, da nur im Bereich der Stege geschweißt werden kann. Zudem entsteht während des Ultraschallschweißen aufgrund eines gleichzeitig erfolgenden axialen Zusammenschiebens der beteiligten Bauteile Schweißgut, dass nicht vollständig aus den Vertiefungen abgeführt werden kann.

Einen Beschlag mit einem Befestigungsring offenbart ebenfalls die DE 20 2011 106 338 U1. Dieser Befestigungsring weist jedoch keine Mittel auf, die eine definierte Winkellage des Befestigungsringes relativ zum Mitnehmer bewirken.

Ein komplexes Hebelgetriebe zur Entriegelung eines Beschlages ist aus der US 7 100 987 B2 bekannt. Ein Kurbeltrieb des Hebelgetriebes treibt einen Mitnehmer des Beschlages an. Ein separat ausgebildeter und mit dem Mitnehmer verbundener Befestigungsring ist nicht Bestandteil des Beschlages.

Die WO 2009/100125 A2 offenbart einen Beschlag für einen Fahrzeugsitz mit einem Befestigungsring, der in Umfangsrichtung eine Vielzahl von Nocken aufweist. Während des Montageprozesses wird der Befestigungsring auf einen zylindrischen Bereich eines Mitnehmers aufgeschoben. Der zylindrische Bereich hat eine glatte, zylindrische Oberfläche und weist keine Nocken oder sonstigen Unebenheiten auf. Es sind keine Mittel zur Zentrierung der Winkellage des Befestigungsringes relativ zum Mitnehmer vorgesehen.

Aus der WO 2011/160771 A1 ist ein Beschlag für einen Fahrzeugsitz bekannt, welcher ein erstes Beschlagteil und ein zweites Beschlagteil aufweist, die miteinander verriegelbar und relativ zueinander um eine Achse A verdrehbar sind, einer Übertragungsstange, deren Drehung den Beschlag entriegelt, und einem Handhebel, dessen Betätigung zum Entriegeln des Beschlags die Übertragungsstange dreht, wobei ein Anschlagmodul vorgesehen ist, welches in Wirkverbindung einerseits mit dem Handhebel und andererseits mit der Übertragungsstange steht und welches in wenigstens eine Drehrichtung den Handhebel und eines der Beschlagteile relativ zueinander in Anschlag bringt. Im Zentrum des Beschlags ist ein Mitnehmer angeordnet. An einem Ende des Mitnehmers ist ein Befestigungsring vorgesehen. Ein Durchlass des Befestigungsrings wird auf einen zylindrischen Bereich des Mitnehmers aufgeschoben. Es sind keine Mittel vorgesehen, die zur Winkelzentrierung während eines Montageprozesses des Beschlags, insbesondere während des Aufschiebens des Befestigungsrings auf den Mitnehmer, geeignet sind.

### Aufgabe

Der Erfindung liegt die Aufgabe zu Grunde, einen Beschlag der eingangs genannten Art zu verbessern, insbesondere die Winkellage des Befestigungsringes relativ zum Mitnehmer mit einfachen Mitteln sicherzustellen und die Möglichkeit einer optionalen, umlaufenden Ultraschallschweißnaht zwischen Befestigungsring und Mitnehmer bereitzustellen sowie durch Verwendung eines solchen Beschlags einen Fahrzeugsitz zur Verfügung zu stellen, der kostengünstig ist sowie eine hohe Festigkeit und geringe Toleranzen aufweist.

### Lösung

Diese Aufgabe wird erfindungsgemäß durch einen Beschlag mit den Merkmalen des Anspruches 1 und einen Fahrzeugsitz mit den Merkmalen des Anspruches 13 gelöst.

Vorteilhafte Ausgestaltungen, welche einzeln oder in Kombination miteinander eingesetzt werden können, sind Gegenstand der Unteransprüche.

Dadurch, dass der Befestigungsring einen Bund mit einem Durchlass um die zentrale Achse aufweist und mindestens ein erster Nocken innerhalb des Durchlasses in radialer Richtung auf die zentrale Achse hin ausgerichtet ausgebildet ist, kann eine einfache Winkelzentrierung während des Montageprozesses, insbesondere während des Aufschiebens des Befestigungsrings auf den Mitnehmer, bereitgestellt werden. Zudem besteht die Möglichkeit, eine umlaufende Ultraschallschweißnaht zwischen dem Befestigungsring und dem Mitnehmer zu erzeugen.

Für eine besonders wirkungsvolle Winkelzentrierung während des Aufschiebens steht mindestens ein Mitnehmernocken in axialer Richtung von einer Stirnfläche des Mitnehmers ab und wirkt mit dem mindestens einen ersten Nocken des Befestigungsringes zusammen. Der mindestens eine Mitnehmernocken weist dazu eine Zentrierfläche auf, die in Umfangsrichtung an einer Anlagefläche des mindestens einen ersten Nockens des Befestigungsrings anliegt. Zwischen der Zentrierfläche und der Anlagefläche ist dabei zumindest abschnittsweise ein Zentrierwinkel von 6°+/- 4°, vorzugsweise von 4°+/-1° vorgesehen. Durch diesen Zentrierwinkel kann eine eventuell vorhandene geringfügige relative Winkelabweichung um die zentrale Achse ausgeglichen werden, indem die um den Zentrierwinkel geneigten Anlageflächen der ersten Nocken während des Aufschiebens in axialer Richtung auf den Zentrierflächen der Mitnehmernocken abgleiten und dadurch der Befestigungsring in die richtige Winkellage gedreht wird.

Vorzugsweise ist die Anlagefläche des mindestens einen ersten Nockens des Befestigungsrings in axialer Richtung in einem ersten Teilabschnitt gegenüber einer Parallelen zur Achse geneigt und in einem zweiten Teilabschnitt zu der Achse parallel verlaufend ausgebildet. Der Zentrierwinkel liegt dann nur in dem ersten Teilabschnitt vor. Die Zentrierfläche und die Anlagefläche des fertig montierten Beschlags liegen nur in dem zweiten Teilabschnitt ohne den Zentrierwinkel aneinander an. Auf den Befestigungsring wirkt dadurch im fertig montierten Zustand keine axiale Kraftkomponente, die den Befestigungsring von dem Mitnehmer weg bewegen könnte.

Eine Zentrierung des Befestigungsrings in radialer Richtung zu Beginn des Aufschiebens des Befestigungsrings auf den Mitnehmer kann verbessert werden, indem der Mitnehmernocken an seinem der Stirnfläche des Mitnehmers abgewandten Ende an seiner Innenkante eine umlaufende Fase aufweist.

Dadurch, dass mindestens zwei Nockenpaare aus jeweils einem der Mitnehmernocken und einem der ersten Nocken vorgesehen sind, die in jeweils entgegengesetzter Umfangsrichtung aneinander anliegen, vorzugsweise indem die mindestens zwei Nockenpaare zueinander spiegelsymmetrisch ausgebildet sind, wirkt die Winkelzentrierung in beide Umfangsrichtungen.

Der Befestigungsring lässt sich in radialer Richtung besonders wirkungsvoll relativ zum Mitnehmer ausrichten, indem der Befestigungsring vorzugsweise drei oder mehr zweite Nocken aufweist, die in radialer Richtung an dem Mitnehmer anliegen. Drei zweite Nocken bieten eine statisch bestimmte Anlage nach dem Prinzip eines Dreibeins. Eine Verdopplung der Anzahl der zweiten Nocken auf sechs zweite Nocken, die vorzugsweise gleichmäßig über den Umfang verteilt sind, bietet eine optimale Ausrichtung auch bei wechselnden Belastungsrichtungen.

Ultraschallschweißen ist ein bevorzugtes, weil kostengünstiges und dennoch hochfestes Fügeverfahren zur Verbindung des Befestigungsrings mit dem Mitnehmer. Besonders gute Schweißergebnisse lassen sich erzielen, indem eine um die zentrale Achse umlaufende Kante des Befestigungsrings an einer um die zentrale Achse umlaufenden Ringfläche des Mitnehmers anliegt und in diesem Anlagebereich verschweißt wird. Das während des Ultraschallschweißens entstehende Schweißgut lässt sich vorteilhaft aufnehmen, da angrenzend an die mindestens drei zweiten Nocken ein Spalt zwischen dem Befestigungsring und dem Mitnehmer besteht, der mit dem Schweißgut gefüllt werden kann.

### Figuren und Ausführungsformen der Erfindung

Im Folgenden ist die Erfindung anhand eines in den Figuren dargestellten vorteilhaften Ausführungsbeispiels näher erläutert. Es zeigen:

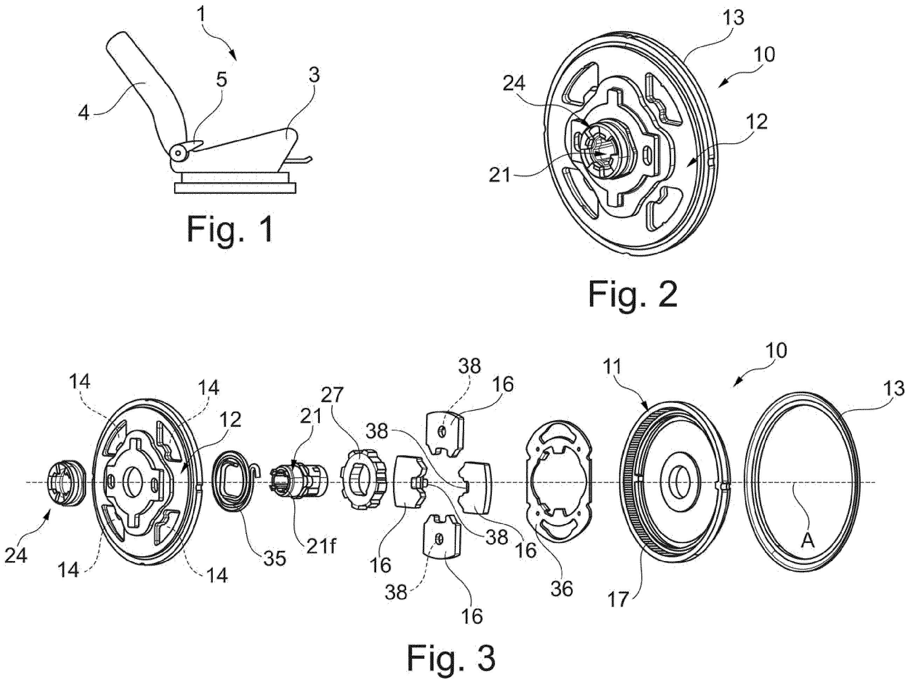

- Fig. 1:: eine schematische Darstellung eines Fahrzeugsitzes,
- Fig. 2:: eine perspektivische Darstellung eines Beschlags,
- Fig. 3:: eine Explosionsdarstellung des Beschlags,
- Fig. 4:: einen axialen Schnitt durch den Beschlag,
- Fig. 5:: eine Explosionsdarstellung von Mitnehmer und Befestigungsring,
- Fig. 6:: eine perspektivische Ansicht des Befestigungsrings,
- Fig. 7:: eine Draufsicht auf den Mitnehmer und den Befestigungsring,
- Fig. 8:: einen Schnitt entlang der Linie VIII - VIII in Fig. 7,
- Fig. 9a:: den Befestigungsring zu Beginn des Aufschiebens auf den Mitnehmer,
- Fig. 9b:: den Befestigungsring während des Aufschiebens auf den Mitnehmer und
- Fig. 9c:: den fertig an den Mitnehmer montierten Befestigungsring

Ein Fahrzeugsitz 1 für ein Kraftfahrzeug weist ein Sitzteil 3 und eine Lehne 4 auf, welche mittels jeweils eines Beschlags 10 auf beiden Seiten des Fahrzeugsitzes 1 relativ zum Sitzteil 3 schwenkbar am Sitzteil 3 angebracht ist.

Der Beschlag 10 weist ein erstes Beschlagteil 11 und ein zweites Beschlagteil 12 auf, welche relativ zueinander um eine imaginäre zentrale Achse A drehbar sind. Die Achse A ist horizontal im Übergangsbereich zwischen Sitzteil 3 und Lehne 4 angeordnet und definiert die verwendeten Richtungsangaben eines Zylinderkoordinatensystems. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist vorzugsweise eine im Wesentlichen flache Ringform auf, kann aber in alternativer Ausführung L-förmig profiliert mit einem Zylinderabschnitt und stirnseitig einem flachen Ringabschnitt sein.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise mittels Laserschweißens oder mittels einer anderen an sich bekannten Befestigungstechnik. Mittels eines inneren Ringabschnittes, welcher in einer zur axialen Richtung senkrechten Ebene angeordnet ist, übergreift der Umklammerungsring 13, gegebenenfalls unter Zwischenlage eines Gleitrings, das erste Beschlagteil 11 in dessen radial äußerem Randbereich, ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 12 umklammern also das relativ zu ihnen bewegliche Beschlagteil 11. In baulicher Hinsicht bilden die beiden Beschlagteile 11 und 12 daher zusammen (mit dem Umklammerungsring 13) eine scheibenförmige Einheit.

Mit der Montage des Beschlags 10 steht das erste Beschlagteil 11 beispielsweise in Verbindung mit der Lehne 4. Das zweite Beschlagteil 12 ist dann fest mit der Struktur des Sitzteils 3 verbunden, also sitzteilfest. Vorliegend ist das zweite Beschlagteil 12 mittels Laserschweißens an einem Sitzteiladapter angeschweißt. Die Zuordnungen der Beschlagteile 11 und 12 können jedoch auch vertauscht sein, d.h. das erste Beschlagteil 11 wäre dann sitzteilfest und das zweite Beschlagteil 12 mit der Lehne 4 verbunden. Der Beschlag 10 liegt im Kraftfluss zwischen Lehne 4 und Sitzteil 3.

Der Beschlag 10 ist als Rastbeschlag ausgebildet, bei welchem das erste Beschlagteil 11 und das zweite Beschlagteil 12 miteinander verriegelbar sind, wie es beispielsweise in der DE 10 2006 015 560 B3 beschrieben ist.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90° - versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt.

Das erste Beschlagteil 11 ist in einer Vertiefung des zweiten Beschlagteils 12 angeordnet und wird durch dieses radial außen übergriffen, wodurch die beiden Beschlagteile 11 und 12 einander lagern. Dabei ist der radial äußere Randbereich des ersten Beschlagteils 11 mit dem Zahnkranz 17 in radialer Richtung zwischen den Führungssegmenten 14 und dem (der Lagerung des ersten Beschlagteils 11 dienenden) radial äußeren Randbereich des zweiten Beschlagteils 12 angeordnet. Bei hohen Belastungen, beispielsweise im Crashfall, kann das erste Beschlagteil 11 - nach einer Verformung - mit seinem Zahnkranz 17 in Anlage an die in Lastrichtung näher gelegenen Führungssegmente 14 kommen, welche in Richtung zum Zahnkranz 17 entsprechend (konzentrisch) gekrümmte Flächen aufweisen. Dies erhöht die Festigkeit des Beschlags 10.

Das erste Beschlagteil 11 kann im zweiten Beschlagteil 12 gelagert sein. Die Verhältnisse könnten aber genau umgekehrt sein, d.h. das zweite Beschlagteil 12 kann auf dem ersten Beschlagteil 11 gelagert sein. Grundsätzlich sind aber beide Anordnungen gleichwertig.

Im Zentrum des Beschlags 10 ist ein Mitnehmer 21 angeordnet. Der Mitnehmer 21 erstreckt sich in Richtung der Achse A und ist um die Achse A herum mit einer Durchgangsöffnung versehen. Der Mitnehmer 21 ist vorliegend ein einteiliges Kunststoffbauteil. An seinem zum ersten Beschlagteil 11 hin orientierten Ende weist der Mitnehmer 21 einen ersten Zylinderabschnitt 21a auf, mit dessen Außenfläche der Mitnehmer 21 drehbar an dem ersten Beschlagteil 11 gelagert ist, genauer gesagt in einer zentralen Öffnung desselben. In Richtung des zweiten Beschlagteils 12 schließen sich an den ersten Zylinderabschnitt 21a ein erster Profilabschnitt 21b, ein zweiter Profilabschnitt 21c, ein zweiter Zylinderabschnitt 21d, ein dritter Zylinderabschnitt 21e und vier Mitnehmernocken 21f in dieser Reihenfolge an.

Auf dem im Querschnitt annähernd quadratisch ausgeführten ersten Profilabschnitt 21b des Mitnehmers 21 sitzt drehfest ein Exzenter 27, welcher in dem zwischen den Beschlagteilen 11 und 12 definierten Bauraum angeordnet ist. Eine Federanordnung 35, beispielsweise eine oder zwei ineinander geschachtelte Spiralfedern, ist in einer zentralen Aufnahme eines der beiden Beschlagteile 11 und 12, vorliegend des zweiten Beschlagteils 12, angeordnet und vorliegend außen an diesem abgestützt. Die Federanordnung 35 beaufschlagt den Exzenter 27, vorliegend indem sie innen drehfest auf dem im Querschnitt annähernd quadratisch ausgeführten zweiten Profilabschnitt 21c des Mitnehmers 21 sitzt. Eine derartige Federanordnung 35 ist beispielsweise in der DE 10 2005 046 807 B3 beschrieben. Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist.

Der zweite Zylinderabschnitt 21d des Mitnehmers 21 ragt durch eine kreisrunde Öffnung des zweiten Beschlagteils 12 hindurch aus dem Beschlag 10 heraus, so dass sich der an den zweiten Zylinderabschnitt 21d anschließende dritte Zylinderabschnitt 21e vollständig außerhalb des von dem ersten Beschlagteil 11 und dem zweiten Beschlagteil 12 gebildeten Bauraums des Beschlags 10 befindet. Der Außendurchmesser des dritten Zylinderschnitts 21e ist geringfügig kleiner als der Außendurchmesser des zweiten Zylinderschnitts 21d, so dass im Übergangsbereich zwischen dem zweiten Zylinderschnitt 21d und dem dritten Zylinderschnitt 21e eine senkrecht zur Achse A orientierte Ringfläche 21s vorliegt.

Der dritte Zylinderabschnitt 21e weist an seinem vom zweiten Zylinderabschnitt 21d abgewandten Ende eine Stirnfläche 21e' auf. Vier Mitnehmernocken 21f sind gleichmäßig über den Umfang der Stirnfläche 21e' verteilt und radial außen an dieser befestigt. Die radial nach außen weisenden Begrenzungsflächen der Mitnehmernocken 21f liegen auf einer imaginären Verlängerung der Außenfläche des dritten Zylinderabschnitts 21e und erstrecken sich von der Stirnfläche 21e' aus in axialer Richtung vom dritten Zylinderabschnitt 21e weg.

Im Bereich des zweiten Zylinderabschnitts 21d und des dritten Zylinderabschnitts 21e ist an dem Mitnehmers 21 ein Befestigungsring 24 vorgesehen, welcher vorliegend aus Kunststoff besteht und mittels Ultraschallschweißens am Mitnehmer 21 befestigt ist.

Eine Steuerscheibe 36 ist im Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Lehne 4 ist nun um die Achse A schwenkbar, um ihre Neigung einzustellen, d.h. um eine andere Gebrauchsstellung einzunehmen.

Die Lehne 4 ist mittels des beschriebenen Beschlags 10 neigungseinstellbar, d.h. kann verschiedene Gebrauchsstellungen einnehmen. Zusätzlich oder alternativ kann die Lehne 4 freigeschwenkt werden, d.h. vorgeschwenkt werden, um den Einstieg in eine hintere Sitzreihe eines beispielsweise zweitürigen oder dreitürigen Kraftfahrzeuges zu erleichtern, oder von der aufrechten Gebrauchsstellung in eine horizontale Tischstellung überführt zu werden. Der Beschlag 10 soll dann nur in wenigen ausgewählten Stellungen verriegeln. Es erhöht den Bedienkomfort, wenn der Beschlag 10 dann nach dem Entriegeln nicht während des gesamten Schwenkens in eine solche ausgewählte Stellung gehalten werden muss. Im Beschlag 10 ist hierfür zwischen der Steuerscheibe 36 und dem ersten Beschlagteil 11 um die Achse A herum optional ein in den Figuren nicht dargestelltes ringförmiges Freischwenk-Steuerelement vorgesehen, welches drehfest mit dem ersten Beschlagteil 11 verbunden ist. Das Freischwenk-Steuerelement weist Anschlagbahnen auf, die mit den Nasen 38 der Riegel 16 zusammenwirken, indem sie deren Bewegung radial nach außen begrenzen oder diese ungehindert einfallen lassen. Um die Lehne 4 über mehr als den Winkel zwischen zwei Riegeln 16 freischwenken zu können, sind die Nasen 38 der Riegel 16 abwechselnd unterschiedlich weit radial außen oder radial innen an den ihnen zugeordneten Riegeln 16 angeordnet, so dass benachbarte Nasen 38 mit unterschiedlichen Anschlagbahnen zusammenwirken. Entsprechend sind zwei unterschiedliche Ausbildungen der Riegel 16 vorgesehen. Details sind in der DE 10 2006 015 560 B3 beschrieben.

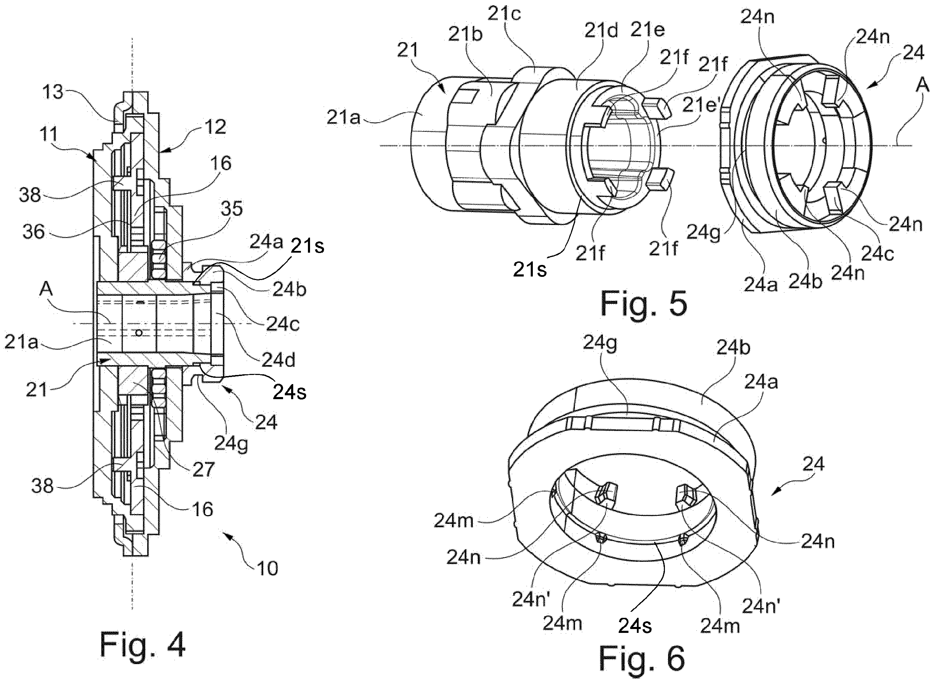

Der Befestigungsring 24 weist mehrere, vorliegend vier, verschiedene Funktionsbereiche auf. Unmittelbar axial benachbart zum zweiten Beschlagteil 12 weist der Befestigungsring 24 ein Außenprofil 24a auf, vorliegend ein Vierkant mit abgerundeten Ecken, welcher umlaufend auf einer radial abstehenden Materialpartie ausgebildet ist. An dem vom zweiten Beschlagteil 12 abgewandten, freien Ende weist der Befestigungsring 24 einen Bund 24b auf, welcher ebenfalls radial absteht. Radial innerhalb des Bundes 24b, also in einer Vertiefung des Befestigungsringes 24, ist ein Innenprofil 24c ausgebildet, vorliegend als Keilprofil mit vierzähliger Symmetrie. Radial innen ist der hohle Befestigungsring 24 mit einem Durchlass 24d versehen, der in axialer Richtung leicht gestuft ausgeführt ist. Eine der Stufen ist als Kante 24s ausgeführt. Während der Montage des Befestigungsrings 24 auf den Mitnehmer 21 wird der Durchlass 24d über den zweiten Zylinderabschnitt 21d und den dritten Zylinderabschnitt 21e des Mitnehmers 21 geschoben, bis die Kante 24s umlaufend an der Ringfläche 21s anliegt. An dieser Stelle entsteht beim Ultraschallschweißen eine umlaufende Schweißverbindung zwischen Befestigungsring 24 und Mitnehmer 21, wie dies grundsätzlich aus der DE 10 2008 024 853 A1 bekannt ist. Der in Fig. 4 sinnbildlich dargestellte Spalt zwischen der Ringfläche 21s und der Kante 24s dient lediglich der Veranschaulichung der Schweißstelle, ist jedoch nach dem Verschweißen nicht mehr vorhanden.

Das Außenprofil 24a ist zum optionalen drehfesten Zusammenwirken mit einem Indikator vorgesehen. Der Indikator ist ein Ring mit einem radial abstehenden Zeiger, wobei der Ring ein zum Außenprofil 24a passendes, vorzugsweise formschlüssig zusammenwirkendes Profil aufweist. Der Indikator gibt die Winkellage des Mitnehmers 21 und damit des Exzenters 27 an, welche wiederum ein Maß dafür ist, ob die vom Exzenter 27 beaufschlagten Riegel 16 radial außen oder radial innen sind, d.h. der Beschlag 10 verriegelt oder entriegelt ist.

Axial zwischen dem Außenprofil 24a und dem Bund 24b ist am Befestigungsring 24 eine Rille 24g ausgebildet, welche beispielsweise gegenüber dem Bund 24b 1 mm tief ist. Der Bund 24b ist für eine Clipsverbindung mit einem aufzuclipsenden Bauteil vorgesehen. Aufgrund der Rille 24g kann der Bund 24b in axialer Richtung hintergriffen werden, um die Clipsverbindung zu schaffen. Das aufzuclipsende Bauteil, welches einen oder mehrere hakenförmige Vorsprünge zum Zusammenwirken mit dem Bund 24b aufweist, ist beispielsweise ein Betätigungshebel 5.

Das Innenprofil 24c ist für eine drehfeste Verbindung mit einem den Mitnehmer 21 beaufschlagenden Teil vorgesehen, vorliegend dem besagten Betätigungshebel 5, welcher ein zum Innenprofil 24c passendes, vorzugsweise formschlüssig zusammenwirkendes Profil an einem Lagerabschnitt aufweist. Der Betätigungshebel 5 ist dadurch mittels des Lagerabschnitts am Befestigungsring 24 gelagert und drehfest mit dem Mitnehmer 21 verbunden und mittels der Clipsverbindung mit dem Bund 24b axial gesichert.

Die Nutzung der zuvor beschriebenen Funktionsbereiche des Befestigungsrings 24 (Außenprofil 24a, Bund 24b, Innenprofil 24c und Durchlass 24d) bedingen eine eindeutige und möglichst gering toleranzbehaftete Winkellage des Befestigungsrings 24 relativ zum Mitnehmer 21. Um dies während des Montageprozesses zu erreichen, weist der Bund 24b des Befestigungsrings 24 vier erste Nocken 24n innerhalb des Durchlasses 24d auf, die in radialer Richtung auf die Achse A hin ausgerichtet sind und mit den Mitnehmernocken 21f des Mitnehmers 21 zusammen wirken. Die Mitnehmernocken 21f weisen dazu jeweils eine Zentrierfläche 21f auf, die in Umfangsrichtung jeweils an einer Anlagefläche 24n' der ersten Nocken 24n anliegen. Dadurch ist die Winkellage des Befestigungsrings 24 relativ zum Mitnehmer 21 eindeutig bestimmt, bevor die Bauteile miteinander verbunden, vorzugsweise ultraschallverschweißt werden.

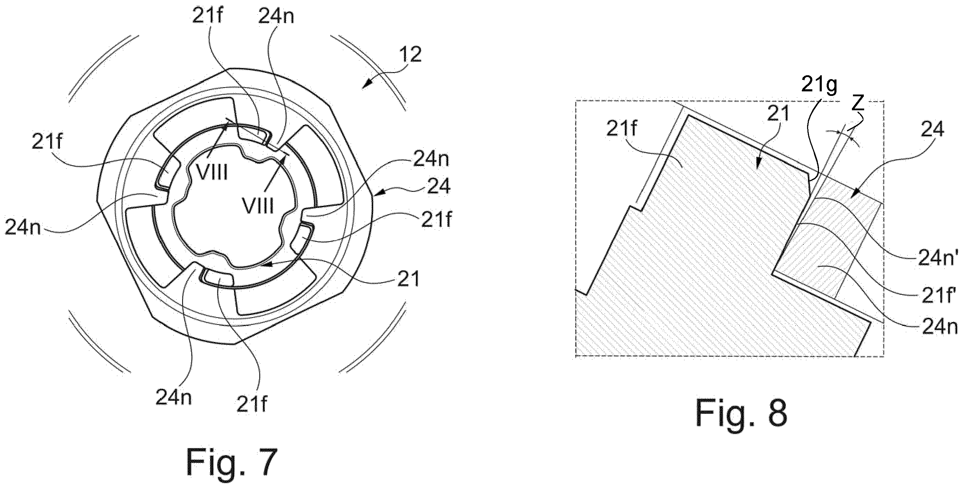

Wie in Figur 8 dargestellt, ist zwischen der Zentrierfläche 21f und der Anlagefläche 24n' jeweils ein Zentrierwinkel Z von vorliegend 4°+/-1° vorgesehen, indem vorliegend die Anlageflächen 24n' gegenüber einer Parallelen zur Achse A um diesen Zentrierwinkel Z geneigt sind, während die Zentrierflächen 21f achsparallel verlaufen. Es sind jedoch auch Abwandlungen möglich, bei denen nur oder auch die Zentrierflächen 21f gegenüber einer Parallelen zur Achse A um einen Winkel geneigt sind.

In einer weiteren Abwandlung des Ausführungsbeispiels ist die Anlagefläche 24n' in axialer Richtung nur in einem ersten Teilabschnitt abschnittsweise gegenüber einer Parallelen zur Achse A geneigt. Ein zur Achse A parallel verlaufender zweiter Teilabschnitt ist im montierten Zustand parallel und in Kontakt zur Zentrierfläche 21f'.

Der Mitnehmernocken 21f weist an seinem der Stirnfläche 21e' abgewandten Ende an seiner Innenkante eine umlaufende Fase 21g auf, die einer Zentrierung des Befestigungsrings 24 zu Beginn des Aufschiebens des Befestigungsrings 24 auf den Mitnehmer 21 dient.

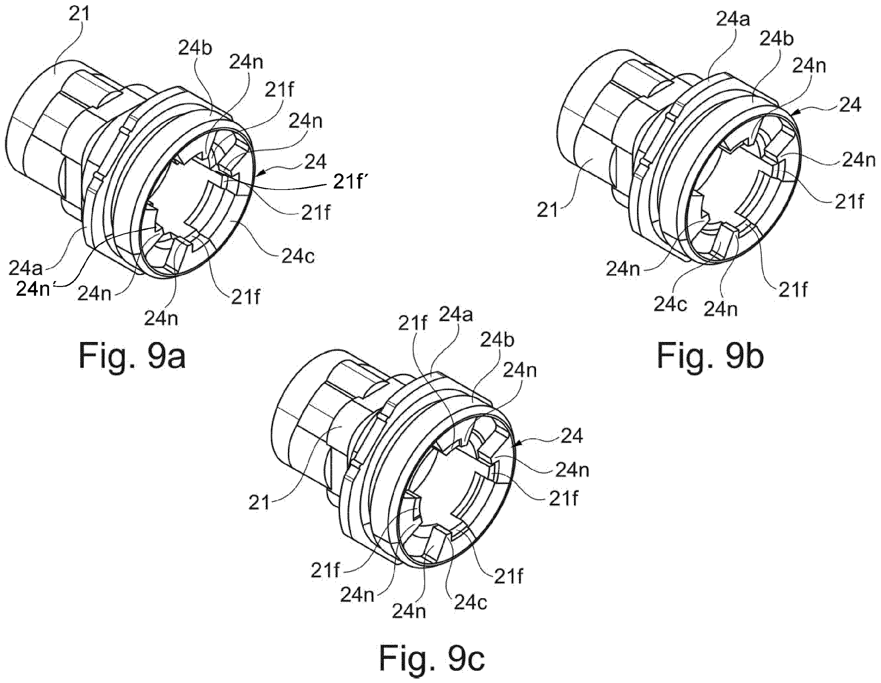

Während des in den Figuren 9a bis 9c dargestellten Aufschiebens des Befestigungsrings 24 auf den Mitnehmer 21 kann eine eventuell vorhandene geringfügige relative Winkelabweichung um die Achse A ausgeglichen werden, indem die um den Zentrierwinkel Z geneigten Anlageflächen 24n' der ersten Nocken 24n während des Aufschiebens in axiale Richtung auf die Zentrierflächen 21f' der Mitnehmernocken 21f an den geneigten Zentrierflächen 21f' entlang gleiten und dadurch in die richtige Winkellage gedreht werden.

Eine optimale Zentrierung in beide Umfangsrichtungen wird erreicht, indem zwei Nockenpaare, bestehend aus jeweils einem Mitnehmernocken 21f und einem ersten Nocken 24n, vorgesehen sind, wobei die Mitnehmernocken 21f und die ersten Nocken 24n in jeweils entgegengesetzter Umfangsrichtung aneinander anliegen. Dazu sind die Nockenpaare zueinander spiegelsymmetrisch ausgebildet.

Der Befestigungsring 24 weist zudem vorzugsweise drei oder mehr, vorliegend sechs zweite Nocken 24m auf, die im Durchlass 24d im Bereich des Außenprofils 24a in radialer Richtung nach innen ragen und im montierten Zustand des Beschlags 10 an dem zweiten Zylinderabschnitt 21d des Mitnehmer 21 anliegen. Dadurch wird der Befestigungsring 24 im Montageprozess während des Aufschiebens auf den Mitnehmer 21 in radialer Richtung exakt gegenüber dem Mitnehmer 21 positioniert. Während der Montage passieren zunächst die zweiten Nocken 24m die Außenfläche des dritten Zylinderabschnitts 21e, der einen gegenüber dem zweiten Zylinderabschnitt 21d etwas kleineren Durchmesser hat. Wenn die ersten Nocken 24n bereits mit den Mitnehmernocken 21f zur Ausrichtung der relativen Winkellage von Mitnehmer 21 und Befestigungsring 24 zusammenwirken, kommen die zweiten Nocken 24m mit dem zweiten Zylinderabschnitt 21d in Kontakt und zentrieren unter elastischer und/oder plastischer Verformung der zweiten Nocken 24m den Mitnehmer 21 und den Befestigungsring 24 in radialer Richtung zueinander.

Angrenzend an die zweiten Nocken 24m besteht ein kleiner Spalt zwischen dem Befestigungsring 24 und dem Mitnehmer 21, der insbesondere mit während des Ultraschallschweißens entstehendem Schweißgut gefüllt ist.

### Bezugszeichenliste

- 1: Fahrzeugsitz
- 3: Sitzteil
- 4: Lehne
- 5: Betätigungshebel
- 10: Beschlag
- 11: erstes Beschlagteil
- 12: zweites Beschlagteil
- 13: Umklammerungsring
- 14: Führungssegment
- 16: Riegel
- 17: Zahnkranz
- 21: Mitnehmer
- 21a: erster Zylinderabschnitt
- 21b: erster Profilabschnitt
- 21c: zweiter Profilabschnitt
- 21d: zweiter Zylinderabschnitt
- 21e: dritter Zylinderschnitt
- 21e': Stirnfläche
- 21f: Mitnehmernocken
- 21f': Zentrierfläche
- 21s: Ringfläche
- 21g: Fase
- 24: Befestigungsring
- 24a: Außenprofil
- 24b: Bund
- 24c: Innenprofil
- 24d: Durchlass
- 24g: Rille
- 24m: zweiter Nocken
- 24n: erster Nocken
- 24n': Anlagefläche
- 24s: Kante
- 27: Exzenter
- 35: Federanordnung
- 36: Steuerscheibe
- 38: Nase
- A: Achse
- Z: Zentrierwinkel

## Patentansprüche

1. Beschlag (10) für einen Fahrzeugsitz (1), insbesondere für einen Kraftfahrzeugsitz, mit
a) einem ersten Beschlagteil (11) und einem zweiten Beschlagteil (12), welche relativ zueinander um eine Achse (A) drehbar sind, wobei am ersten Beschlagteil (11) ein Zahnkranz (17) und am zweiten Beschlagteil (12) Führungssegmente (14) ausgebildet sind, und
b) Riegeln (16), welche mittels der Führungssegmente (14) geführt zwischen einem verriegelten Zustand und einem entriegelten Zustand verschiebbar sind, und welche im verriegelten Zustand mit dem Zahnkranz (17) zusammenwirken, um den Beschlag (10) zu verriegeln,
c) einem federbelasteten, drehbar gelagerten Exzenter (27), welcher die Riegel (16) beaufschlagt, um sie zum Zusammenwirken mit dem Zahnkranz (17) zu bringen,
d) einem drehbar gelagerten Mitnehmer (21) zum Drehen des Exzenters (27),
e) einem vom Mitnehmer (21) separat ausgebildeten und mit dem Mitnehmer (21) fest verbundenen Befestigungsring (24) und
f) mindestens einem am Befestigungsring (24) ausgebildeten ersten Nocken (24n), der in Umfangsrichtung an mindestens einem Mitnehmernocken (21f) des Mitnehmers (21) anliegt, wobei
g) der Befestigungsring (24) einen Bund (24b) mit einem Durchlass (24d) um die Achse (A) aufweist und der mindestens eine erste Nocken (24n) innerhalb des Durchlasses (24d) in radialer Richtung auf die Achse (A) hin ausgerichtet ausgebildet ist, wobei
der mindestens eine Mitnehmernocken (21f) eine Zentrierfläche (21f') aufweist, die in Umfangsrichtung an einer Anlagefläche (24n') des mindestens einen ersten Nockens (24n) anliegt, und wobei
mindestens zwei Nockenpaare aus jeweils einem der Mitnehmernocken (21f) und einem der ersten Nocken (24n) vorgesehen sind, wobei die Mitnehmernocken (21f) und die ersten Nocken (24n) der mindestens zwei Nockenpaare in jeweils entgegengesetzter Umfangsrichtung aneinander anliegen.

2. Beschlag (10) nach Anspruch 1, **dadurch gekennzeichnet, dass** der mindestens eine Mitnehmernocken (21f) in axialer Richtung von einer Stirnfläche (21e') des Mitnehmers (21) absteht.

3. Beschlag (10) nach Anspruch 1 oder 2, **dadurch gekennzeichnet, dass** zwischen der Zentrierfläche (21f') und der Anlagefläche (24n') zumindest abschnittsweise ein Zentrierwinkel (Z) von 6°+/-4°, vorzugsweise von 4°+/-1° vorgesehen ist.

4. Beschlag (10) nach Anspruch 3, **dadurch gekennzeichnet, dass** die Anlagefläche (24n') in axialer Richtung in einem ersten Teilabschnitt gegenüber einer Parallelen zur Achse (A) geneigt und in einem zweiten Teilabschnitt zu der Achse (A) parallel verlaufend ausgebildet ist, der Zentrierwinkel (Z) nur in dem ersten Teilabschnitt vorliegt und die Zentrierfläche (21f') und die Anlagefläche (24n') des fertig montierten Beschlags (10) nur in dem zweiten Teilabschnitt aneinander anliegen.

5. Beschlag (10) nach einem der Ansprüche 1 bis 4, **dadurch gekennzeichnet, dass** die mindestens zwei Nockenpaare zueinander spiegelsymmetrisch ausgebildet sind.

6. Beschlag (10) nach einem der Ansprüche 1 bis 5, **dadurch gekennzeichnet, dass** der Befestigungsring (24) mit dem Mitnehmer (21) mittels Ultraschallschweißens verbunden ist.

7. Beschlag (10) nach einem der Ansprüche 1 bis 6, **dadurch gekennzeichnet, dass** der Befestigungsring (24) mindestens drei zweite Nocken (24m) aufweist, die in radialer Richtung an dem Mitnehmer (21) anliegen.

8. Beschlag (10) nach Anspruch 7, **dadurch gekennzeichnet, dass** der Befestigungsring (24) genau drei zweite Nocken (24m) aufweist, die in radialer Richtung an dem Mitnehmer (21) anliegen.

9. Beschlag (10) nach Anspruch 7, **dadurch gekennzeichnet, dass** der Befestigungsring (24) genau sechs zweite Nocken (24m) aufweist, die in radialer Richtung an dem Mitnehmer (21) anliegen.

10. Beschlag (10) nach einem der Ansprüche 1 bis 9, **dadurch gekennzeichnet, dass** eine um die Achse A umlaufende Kante (24s) des Durchlasses (24d) an einer um die Achse A umlaufenden Ringfläche (21s) des Mitnehmers (21) anliegt und in diesem Anlagebereich der Befestigungsring (24) mit dem Mitnehmer (21) verschweißt ist.

11. Beschlag (10) nach einem der Ansprüche 7 bis 9, **dadurch gekennzeichnet, dass** angrenzend an die mindestens drei zweiten Nocken (24m) ein Spalt zwischen dem Befestigungsring (24) und dem Mitnehmer (21) besteht.

12. Beschlag (10) nach Anspruch 11, **dadurch gekennzeichnet, dass** der Spalt mit Schweißgut gefüllt ist.

13. Fahrzeugsitz (1), insbesondere Kraftfahrzeugsitz, mit wenigstens einem Beschlag (10) nach einem der Ansprüche 1 bis 12.

## Claims

1. Fitting (10) for a vehicle seat (1), in particular for a motor vehicle seat, having
a) a first fitting part (11) and a second fitting part (12) which can be rotated about an axis (A) relative to one another, wherein a toothed rim (17) is formed on the first fitting part (11) and guide segments (14) are formed on the second fitting part (12), and
b) locking bars (16) which are displaceably guided between a locked state and an unlocked state by means of the guide segments (14) and which cooperate with the toothed rim (17) in the locked state in order to lock the fitting (10),
c) a spring-loaded, rotatably mounted eccentric (27) which acts on the locking bars (16) in order to bring them into cooperation with the toothed rim (17),
d) a rotatably mounted driver (21) for rotating the eccentric (27),
e) a fastening ring (24) which is configured separately from the driver (21) and is connected fixedly to the driver (21) and
f) at least one first cam (24n) which is formed on the fastening ring (24) and bears in the circumferential direction against at least one driver cam (21f) of the driver (21),
wherein
g) the fastening ring (24) has a collar (24b) with a passage (24d) about the axis (A) and the at least one first cam (24n) is formed within the passage (24d) such that it is oriented in the radial direction toward the axis (A), wherein the at least one driver cam (21f) has a centering surface (21f') which in the circumferential direction bears against a bearing surface (24n') of the at least one first cam (24n), and wherein at least two cam pairs are provided, consisting in each case of one of the driver cams (21f) and one of the first cams (24n), wherein the driver cams (21f) and the first cams (24n) of the at least two cam pairs bear against one another in the respective opposing circumferential direction.

2. Fitting (10) according to Claim 1, **characterized in that** the at least one driver cam (21f) protrudes in the axial direction from a front face (21e') of the driver (21).

3. Fitting (10) according to Claim 1 or 2, **characterized in that** a centering angle (Z) of 6°+/-4°, preferably of 4°+/-1° is provided between the centering surface (21f') and the bearing surface (24n'), at least in regions.

4. Fitting (10) according to Claim 3, **characterized in that** the bearing surface (24n') is inclined in the axial direction relative to a line parallel to the axis (A) in a first partial portion and is configured to extend parallel to the axis (A) in a second partial portion, the centering angle (Z) only being present in the first partial portion and the centering surface (21f') and the bearing surface (24n') of the fully mounted fitting (10) only bearing against one another in the second partial portion.

5. Fitting (10) according to one of Claims 1 to 4, **characterized in that** the at least two cam pairs are configured mirror-symmetrically relative to one another.

6. Fitting (10) according to one of Claims 1 to 5, **characterized in that** the fastening ring (24) is connected to the driver (21) by means of ultrasonic welding.

7. Fitting (10) according to one of Claims 1 to 6, **characterized in that** the fastening ring (24) has at least three second cams (24m) which bear against the driver (21) in the radial direction.

8. Fitting (10) according to Claim 7, **characterized in that** the fastening ring (24) has exactly three second cams (24m) which bear against the driver (21) in the radial direction.

9. Fitting (10) according to Claim 7, **characterized in that** the fastening ring (24) has exactly six second cams (24m) which bear against the driver (21) in the radial direction.

10. Fitting (10) according to one of Claims 1 to 9, **characterized in that** an edge (24s) of the passage (24d) circulating around the axis A bears against an annular surface (21s) of the driver (21) circulating around the axis A and is welded to the driver (21) in this bearing region of the fastening ring (24).

11. Fitting (10) according to one of Claims 7 to 9, **characterized in that** a gap is present between the fastening ring (24) and the driver (21) adjacent to the at least three second cams (24m).

12. Fitting (10) according to Claim 11, **characterized in that** the gap is filled with weld deposit.

13. Vehicle seat (1) in particular motor vehicle seat having at least one fitting (10) according to one of Claims 1 to 12.

## Revendications

1. Ferrure (10) pour un siège de véhicule (1), en particulier pour un siège de véhicule automobile, comprenant
a) une première partie de ferrure (11) et une deuxième partie de ferrure (12) qui peuvent tourner l'une par rapport à l'autre autour d'un axe (A), une couronne dentée (17) étant réalisée au niveau de la première partie de ferrure (11) et des segments de guidage (14) étant réalisés au niveau de la deuxième partie de ferrure (12), et
b) des verrous (16) guidés au moyen des segments de guidage (14), qui peuvent être déplacés entre un état verrouillé et un état déverrouillé et qui, dans l'état verrouillé, coopèrent avec la couronne dentée (17) afin de verrouiller la ferrure (10),
c) un excentrique (27) sollicité par ressort, supporté à rotation, qui sollicite les verrous (16) afin de les amener à coopérer avec la couronne dentée (17),
d) un dispositif d'entraînement (21) supporté de manière rotative pour faire tourner l'excentrique (27),
e) une bague de fixation (24) réalisée de manière séparée du dispositif d'entraînement (21) et connectée fixement au dispositif d'entraînement (21), et
f) au moins une première came (24n) réalisée au niveau de la bague de fixation (24), qui s'applique, dans la direction périphérique, contre au moins une came d'entraînement (21f) du dispositif d'entraînement (21),
g) la bague de fixation (24) présentant un épaulement (24b) avec un passage (24d) autour de l'axe (A) et l'au moins une première came (24n) étant réalisée à l'intérieur du passage (24d) de manière orientée dans la direction radiale vers l'axe (A), l'au moins une came d'entraînement (21f) présentant une surface de centrage (21f') qui s'applique dans la direction périphérique contre une surface d'appui (24n') de l'au moins une première came (24n), et
au moins deux paires de cames constituées chacune de l'une des cames d'entraînement (21f) et de l'une des premières cames (24n) étant prévues, les cames d'entraînement (21f) et les premières cames (24n) des au moins deux paires de cames s'appliquant l'une contre l'autre à chaque fois dans des directions périphériques opposées.

2. Ferrure (10) selon la revendication 1, **caractérisée en ce que** l'au moins une came d'entraînement (21f) fait saillie dans la direction axiale depuis une surface frontale (21e') du dispositif d'entraînement (21).

3. Ferrure (10) selon la revendication 1 ou 2, **caractérisée en ce qu'**entre la surface de centrage (21f') et la surface d'appui (24n') est prévu au moins en partie un angle de centrage (Z) de 6° ± 4°, de préférence de 4° ± 1°.

4. Ferrure (10) selon la revendication 3, **caractérisée en ce que** la surface d'appui (24n') est réalisée de manière inclinée dans la direction axiale dans une première portion partielle par rapport à une parallèle à l'axe (A), et de manière à s'étendre dans une deuxième portion partielle parallèlement à l'axe (A), l'angle de centrage (Z) n'est présent que dans la première portion partielle et la surface de centrage (21f') et la surface d'appui (24n') de la ferrure (10) montée de manière définitive ne s'appliquent l'une contre l'autre que dans la deuxième portion partielle.

5. Ferrure (10) selon l'une quelconque des revendications 1 à 4, **caractérisée en ce que** les au moins deux paires de cames sont réalisées avec une symétrie spéculaire l'une par rapport à l'autre.

6. Serrure (10) selon l'une quelconque des revendications 1 à 5, **caractérisée en ce que** la bague de fixation (24) est connectée au dispositif d'entraînement (21) au moyen d'un soudage par ultrasons.

7. Ferrure (10) selon l'une quelconque des revendications 1 à 6, **caractérisée en ce que** la bague de fixation (24) présente au moins trois deuxièmes cames (24m) qui s'appliquent dans la direction radiale contre le dispositif d'entraînement (21).

8. Ferrure (10) selon la revendication 7, **caractérisée en ce que** la bague de fixation (24) présente exactement trois deuxièmes cames (24m) qui s'appliquent dans la direction radiale contre le dispositif d'entraînement (21).

9. Ferrure (10) selon la revendication 7, **caractérisée en ce que** la bague de fixation (24) présente exactement six deuxièmes cames (24m) qui s'appliquent dans la direction radiale contre le dispositif d'entraînement (21).

10. Ferrure (10) selon l'une quelconque des revendications 1 à 9, **caractérisée en ce qu'**une arête (24s) du passage (24d) entourant l'axe (A) s'applique contre une surface annulaire (21s) du dispositif d'entraînement (21) entourant l'axe (A) et la bague de fixation (24) est soudée dans cette région d'appui au dispositif d'entraînement (21).

11. Ferrure (10) selon l'une quelconque des revendications 7 à 9, **caractérisée en ce qu'**une fente entre la bague de fixation (24) et le dispositif d'entraînement (21) est réalisée en position adjacente aux au moins trois deuxièmes cames (24m).

12. Ferrure (10) selon la revendication 11, **caractérisée en ce que** la fente est remplie de matière de soudage.

13. Siège de véhicule (1), en particulier siège de véhicule automobile, comprenant au moins une ferrure (10) selon l'une quelconque des revendications 1 à 12.
